# EUROPEAN PATENT SPECIFICATION

(11) **EP 3 731 356 B1**
(45) Date of publication and mention of the grant of the patent: **22.03.2023**
(21) Application number: 18891169.7
(22) Date of filing: 16.11.2018
(51) Int. Cl.: H02B 13/035, H02B 13/00

(54) **GAS-INSULATED OPEN/CLOSE DEVICE**
GASISOLIERTE SCHALTANLAGE
APPAREILLAGE DE COUPURE À ISOLATION GAZEUSE

(30) Priority: 22.12.2017 JP 2017245815
(43) Date of publication of application: 28.10.2020
(73) Proprietor: Mitsubishi Electric Corporation, Tokyo 100-8310 (JP)
(72) Inventor: INOUE Naoaki, Tokyo 100-8310 (JP)
(74) Representative: Witte, Weller & Partner Patentanwälte mbB
(86) International application number: PCT/JP2018/042526
(87) International publication number: WO 2019/123926

(56) References cited:
- EP-A1- 1 463 174
- WO-A1-2013/021678
- WO-A1-2015/076029
- WO-A1-2015/076029
- DE-U1- 9 421 443
- JP-A- S60 237 808
- JP-A- 2014 033 562
- JP-A- 2014 096 914
- JP-A- 2016 092 883
- JP-A- 2016 092 883
- US-A1- 2015 295 372

## Description

### TECHNICAL FIELD

The present disclosure relates to a gas-insulated switchgear, and in particular, relates to a bus connection structure thereof.

### BACKGROUND ART

A gas-insulated switchgear has SF6 gas sealed therein, and the device is made compact owing to excellent insulation property of the SF6 gas, thus contributing to space saving in an electrical room. The gas-insulated switchgear is normally configured such that boards for various purposes such as a receiving board and a feeder board are arranged in a row and these boards are connected via buses. Regarding the bus part, a gas bus type is generally adopted in which, when the gas-insulated switchgear is installed, a bus tank is connected, and a bus conductor in the bus tank is connected.

In recent years, there has been a case where a solid insulating bus is used to omit an on-site gas processing work when the gas-insulated switchgear is installed. For example, above a mold unit having an interruption portion and a disconnection portion integrated in a mold, solid insulation buses for three phases are arranged in the left-right direction as seen from the front side of a switchgear (see, for example, Patent Document 1).

Patent Document 2, according to its abstract, relates to a switchgear having a small number of bus connection device parts. A bus connection device is provided with a first bushing having a first connection part in which an end of an internal passing conductor is exposed from a protrusion, a second bushing having a second connection part in which an end of an internal passing conductor is exposed from a protrusion, a connection member that causes the first connection part of the first bushing and the second connection part of the second bushing to be disposed coaxially so as to face each other and electrically connects the first connection part and second connection part, and a cylindrical adapter that is made from insulating material and integrally covers the outer periphery of the protrusion of the first bushing, the protrusion of the second bushing, and the connection member.

Patent Document 3, according to its abstract, relates to a gas-tight main enclosure that contains a power switch compartment. The main enclosure includes a mounting for the power switch compartment and the cable outlet opening. This is sealed gas-tight with a panel or various different fittings.

Patent Document 4, according to its abstract, states that, to provide a cable connecting device that can be removed and replaced with sealing of a vessel kept as it is, when changing the size and the number of connection wires of a cable connected to a sealed electrical apparatus, the cable connecting device includes: a bushing in which a connected port is formed having a through conductor connecting part insulated and supported by sealing through parts of the inside and outside of a vessel for housing an electrical apparatus; and a cable terminal connecting member detachably provided in the through part while comprising an internal conductor having an apparatus side connection part that can be connected to the connection part on one side, an additional installation side connection part coaxially formed with the apparatus side connection part on the other side, and a cable connecting part formed perpendicularly to the coaxial line between the one side and the other side, and an insulating support member having an apparatus side connection port insulating and supporting the internal conductor and forming the apparatus side connection part, the additional installation side connection part, and the cable connecting part in the center thereof, an additional installation side connection port, and a cable connection port.

Patent Document 5, according to its abstract, states that, to obtain a gas insulated switch gear that facilitates inventory control in factory by reducing the number of types of bus bars and that is able to easily cope with user's urgent request for bus bar replacement, in a gas insulation switch gear, tanks accommodating switching devices, such as a breaker and a disconnecting device, with insulating gas sealed therein are arranged in parallel in a horizontal direction, and a horizontal bus bar extends in the direction of parallel arrangement. The gas insulation switch gear comprises: a bus-bar connection device electrically connecting horizontal bus bars composed of a unit bus bar of tank width unit length; and a bus bar support device attached to a tank wall, thereby connecting or supporting the horizontal bus bars. At least both ends of each of the horizontal bus bars are connected to a bus bar connection device. If both the ends are arranged over three or more of the tanks, the horizontal bus bar is supported by the bus-bar support device or bus-bar connection device for each intermediate tank.

Patent Document 6, according to its abstract, relates to a gas-insulated switchgear that is constructed by installing multiple panels side by side in line, each of said panels having the functions of an incoming panel, a transformer panel, and a VCT. The switchgear is provided with horizontal three-phase bus bars, which are used to connect the panels together, for a maximum of four circuits. The space for installing the four circuits' worth of horizontal three-phase bus bars is divided into two rows in the front-back direction and two stages in the vertical direction in the upper or the lower section of a case for the panels in order to accommodate the maximum of four circuits, and the horizontal three-phase bus bars for connecting the panels together are arranged such that conductors of the respective phases are positioned horizontally in the front-back direction of the panels at predetermined intervals. The horizontal three-phase bus bars are provided with bushings on both ends and arranged to run through the installation space, said bushings penetrating through a bus bar connection tank from above or below the bus bar connection tank.

Patent Document 7, according to its abstract, relates to a cable angle plug.

Patent Document 8, according to its abstract, relates to a busbar assembly for interconnecting electrical equipment units. The busbar assembly includes one or more conductors have a conductive rod. Each end of the conductive rod has an end forming a ball member. The busbar assembly also includes two or more connectors having a clamp mechanism to receive the ball member of the conductive rod. A fastener threadably couples with a conductor on an electrical equipment unit to rigidly secure the busbar assembly to the electrical equipment units.

### CITATION LIST

### PATENT DOCUMENT

Patent Document 1: Japanese Laid-Open Patent Publication No. 2017-93133 (page 8, FIGS. 1, 2, and 8)
Patent Document 2: WO 2015/076029 A1
Patent Document 3: EP 1 463 174 A1
Patent Document 4: JP 2014 033562 A
Patent Document 5: JP 2016 092883 A
Patent Document 6: WO 2013/021678 A1
Patent Document 7: DE 94 21 443 U1
Patent Document 8: US 2015/295372 A1

### SUMMARY OF THE INVENTION

### PROBLEMS TO BE SOLVED BY THE INVENTION

As described above, it is possible to omit gas processing work when the gas-insulated switchgear is installed on site, by using a solid insulation bus for the bus part of the gas-insulated switchgear. In the case of a solid insulation bus structure as in Patent Document 1, a bus connection bushing is provided at an upper part of each board of the switchgear, and the solid insulation bus is provided above that. Therefore, in the case where a plurality of open/close devices are arranged in a row, solid insulation buses connecting the arranged boards are located above the plurality of open/close devices so as to pass over the arranged boards.

In such a configuration, in the case of adding an open/close device, it is necessary to perform work in which the buses are powered off, all the solid insulation buses above the already provided boards are detached, the additional board is arranged in a row, and then the solid insulation buses including the one for the additional board are attached again. The reason is as follows. In the solid insulation bus structure as in Patent Document 1, the buses are arranged so as to pass over the arranged boards. Therefore, it is impossible to detach only the solid insulation bus for one panel, and it is necessary to detach all the buses at the same time. Thus, there is a problem that working for additional installation takes a long time.

The present disclosure has been made to solve the above problem, and an object of the present disclosure is to obtain a gas-insulated switchgear that facilitates bus connection work and achieves reduction of working time in the case of increasing arranged boards in additional installation or the like.

### SOLUTION TO THE PROBLEMS

Therefore, there is provided a gas-insulated switchgear system according to claim 1.

A gas-insulated switchgear according to the present disclosure is a gas-insulated switchgear in which a bus tank storing a bus is provided above a circuit breaker tank storing a circuit breaker, wherein the bus is connected to a bus connection bushing provided at a width-direction end of the bus tank, a tank width dimension of the bus tank is smaller than a enclosure width dimension of the gas-insulated switchgear, and a space formed by a difference between the enclosure width dimension and the tank width dimension serves as a connection space for the bus when the gas-insulated switchgear is arranged in a row.

### EFFECT OF THE INVENTION

In the gas-insulated switchgear according to the present disclosure, the tank width dimension of the bus tank storing the bus is smaller than the enclosure width dimension of the gas-insulated switchgear, and the space formed by the difference between the enclosure width dimension and the tank width dimension serves as the connection space for the bus when the gas-insulated switchgear is arranged in a row. Therefore, in the case of performing work of connecting buses with an adjacent board to be arranged in a row, the buses of both adjacent boards can be easily connected using the connection space. Thus, it becomes possible to reduce the working time.

### BRIEF DESCRIPTION OF THE DRAWINGS

[FIG. 1] FIG. 1 is a side sectional view of a gas-insulated switchgear according to embodiment 1.
[FIG. 2] FIG. 2 is a top view of FIG. 1.
[FIG. 3] FIG. 3 is a sectional view of a solid insulation bus adapter of the gas-insulated switchgear according to embodiment 1.
[FIG. 4] FIG. 4 is a sectional view showing a state in which bus connection bushings are inserted into the solid insulation bus adapter shown in FIG. 3.
[FIG. 5] FIG. 5 is a sectional view showing a plug-in contactor used for a bus contact engagement portion shown in FIG. 4.
[FIG. 6] FIG. 6 is a top view showing a process when gas-insulated switchgears for two panels are arranged in a row, according to embodiment 1.
[FIG. 7] FIG. 7 is a top view showing a state in which two-panel board arrangement is completed after the state shown in FIG. 6.
[FIG. 8] FIG. 8 is a top view showing a state in which the solid insulation bus adapters and insulating plugs are attached after two-panel arrangement shown in FIG. 7.
[FIG. 9] FIG. 9 is a top view showing a state in which gas-insulated switchgears for three panels are arranged in a row, according to embodiment 1.
[FIG. 10] FIG. 10 is a single-line diagram of FIG. 9.
[FIG. 11] FIG. 11 is a single-line diagram showing a state in which gas-insulated switchgears for two panels are arranged in a row, according to embodiment 2.
[FIG. 12] FIG. 12 is a single-line diagram showing a state in which gas-insulated switchgears for three panels are arranged in a row, according to embodiment 2.
[FIG. 13] FIG. 13 is a single-line diagram and a front view showing a gas-insulated switchgear according to embodiment 3 which is not claimed.

### DESCRIPTION OF EMBODIMENTS

### Embodiment 1

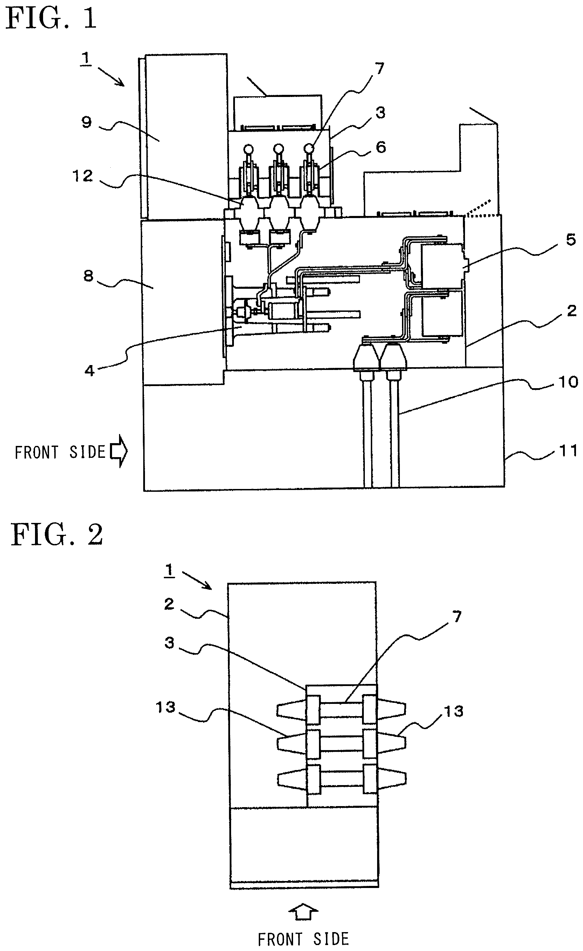

FIG. 1 is a side sectional view of a gas-insulated switchgear according to embodiment 1. FIG. 2 is a top view of the gas-insulated switchgear 1 shown in FIG. 1, as seen from above, and mainly shows the cross section of a bus tank portion at an upper part and a connection portion thereof, while parts not directly relevant to the present disclosure are not shown (the same applies to the other top views). In FIG. 1, the left side in the drawing is the front side, and in FIG. 2, the direction is rotated by 90 degrees so that the lower side is the front side. Therefore, the left-right direction in FIG. 1 corresponds to the depth direction of a switchgear enclosure of the gas-insulated switchgear, and the left-right direction in FIG. 2 corresponds to the width direction of the switchgear enclosure.

As shown in FIG. 1, the gas-insulated switchgear 1 has a circuit breaker tank 2 and a bus tank 3 located above the circuit breaker tank 2. Inside the circuit breaker tank 2 in which insulation gas is sealed, a circuit breaker 4 and an instrument current transformer 5 are provided. Inside the bus tank 3 in which insulation gas is also sealed, disconnectors 6 and buses 7 are provided. An operation chamber 8 storing an operation mechanism and the like is provided in front of the circuit breaker tank 2, a control chamber 9 storing a control device and the like is provided above the operation chamber 8, and a cable chamber 11 storing a power cable 10 is provided under the circuit breaker tank 2.

The movable side of the circuit breaker 4 is connected to the buses 7 via bushings 12 provided at a partition part between the circuit breaker tank 2 and the bus tank 3, and via the subsequent disconnectors 6. The fixed side of the circuit breaker 4 is connected to the power cable 10 via a connection conductor and the instrument current transformer 5 provided at a certain part on the connection conductor.

The internal structures of the circuit breaker tank 2 and the cable chamber 11 are merely examples, and are not limited to those shown in the drawing.

As shown in the top view in FIG. 2, the tank width dimension of the bus tank 3 provided above the circuit breaker tank 2 is set to be smaller than the enclosure width dimension of the gas-insulated switchgear 1, and this is a characteristic part of the present disclosure.

Inside the bus tank 3, the buses 7 for three phases are arranged in parallel along the switchgear width direction. Bus connection bushings 13 are provided at tank wall penetration portions at both ends of the buses 7, and the buses 7 are supported by being connected to the bus connection bushings 13.

In the case where boards are arranged in a row, i.e., a plurality of gas-insulated switchgears 1 are arranged side by side in the width direction, for example, the buses of the gas-insulated switchgear located at the left in FIG. 2 are connected to the bus connection bushings 13 on the left side of the bus tank 3. The buses of the gas-insulated switchgear located at the right are connected to the bus connection bushings 13 on the right side of the bus tank 3.

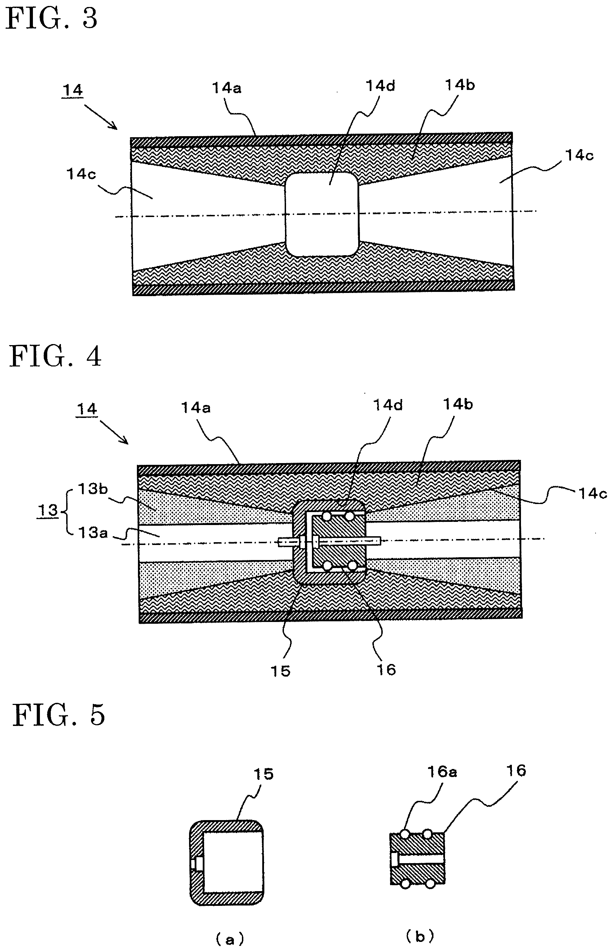

FIG. 3 is a sectional view showing a solid insulation bus adapter 14 used for a part connecting the buses of the respective boards arranged in a row. The entire body thereof has a cylindrical shape, the outer surface is formed to be a surface conductive layer 14a, and an internal insulating layer 14b is formed on the inner side thereof. The internal insulating layer 14b is formed by an elastic insulating material such as rubber, for example. On the inner diameter side, plug-in portions 14c are formed in a tapered shape having a diameter decreasing toward the center from both end sides in the longitudinal direction, and a bus contact engagement portion 14d is formed in a straight shape at the center part.

FIG. 4 is a sectional view showing a state in which the bus connection bushings 13 are inserted into the solid insulation bus adapter 14.

The bus connection bushings 13 are fitted to the plug-in portions 14c, and a plug-in contactor recess 15 and a plug-in contactor projection 16 described below are inserted into the bus contact engagement portion 14d. The procedure for attaching these will be described later.

Of each bus connection bushing 13, the part protruding outward of the bus tank 3 has a conductor portion 13a at the center and an insulating portion 13b coating the outer surface thereof. The insulating portion 13b has a conical shape tapered toward the tip end, and this part is fitted to the plug-in portion 14c.

It is noted that, of the bus connection bushing 13, the part attached to the bus tank 3 and the inward side are not shown in the drawing.

FIG. 5 is a sectional view showing the plug-in contactor projection 16 and the plug-in contactor recess 15 inserted into the bus contact engagement portion 14d. The plug-in contactor recess 15 has a hollow cylindrical shape, one end side thereof is formed to be an attachment surface to the bus connection bushing 13, and an attachment hole is formed at the center part. The plug-in contactor projection 16 has a cylindrical shape, one end side thereof is formed to be an attachment surface to the bus connection bushing 13, and an attachment hole is formed at the center part. In addition, a contactor portion 16a is provided on the outer circumferential surface. The contactor portion 16a comes into contact with the inner circumferential surface of the hollow part of the plug-in contactor recess 15, so as to serve as a current conduction portion.

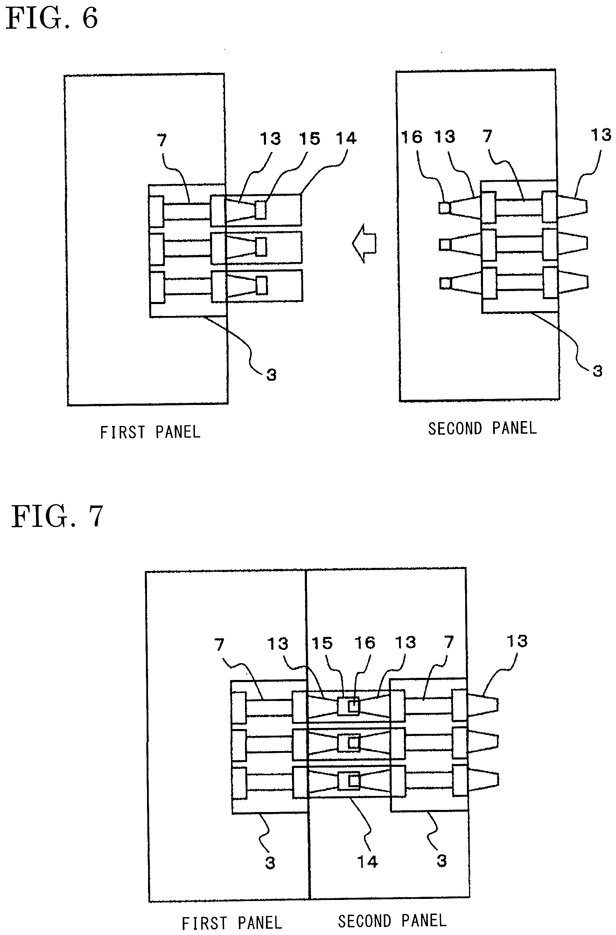

FIG. 6 is a top view showing a process when the gas-insulated switchgears 1 are arranged in a row, and shows only major parts relevant to the present disclosure. The first board is referred to as "first panel", and the board to be added is referred to as "second panel". After the board for the first panel is fixed, the plug-in contactor recesses 15 are attached to the bus connection bushings 13 of the first panel by means of bolt-fastening or the like, and then the solid insulation bus adapters 14 are fitted and attached thereto. Since the internal insulating layer 14b of the solid insulation bus adapter 14 is formed by an elastic material, it is possible to fit the solid insulation bus adapter 14 in a state in which the plug-in contactor recess 15 is attached.

In the case where no board is planned to be arranged at the left of the board for the first panel, the bus connection bushings 13 on the left side of the bus tank 3 for the first panel need not protrude in a conical shape on the outward side, and are only required to have a structure for supporting ends of the buses 7.

In the board for the second panel, the plug-in contactor projections 16 are attached to the bus connection bushings 13 on the left side of the bus tank 3 by means of bolt-fastening or the like. Then, the board for the second panel is slid in the direction toward the board for the first panel, whereby both boards are arranged in a row and at the same time, the bus connection bushings 13 for the first panel and the second panel are plugged in to both sides of the solid insulation bus adapters 14. Thus, bus connection is completed.

FIG. 7 is a top view showing a state in which board arrangement is completed. As shown in FIG. 7, the length of the solid insulation bus adapter 14 is set to be substantially equal to a length obtained by subtracting the tank width dimension of the bus tank 3 from the enclosure width dimension of the gas-insulated switchgear 1. In addition, the length of the part of the bus connection bushing 13 that protrudes outward of the bus tank 3 is set so as to be fitted to the solid insulation bus adapter 14. The solid insulation bus adapter 14 part serves as a solid insulation bus, and therefore, the state after the board arrangement is equivalent to a state in which the buses 7 of both boards are connected to each other via a solid insulation bus. As described above, the space formed by a difference between the enclosure width dimension of the gas-insulated switchgear 1 and the tank width dimension of the bus tank 3 is used as a space for connecting both buses when the boards are arranged in a row.

FIG. 6 and FIG. 7 above have shown the case of operation with two panels. Next, such a case where, for example, operation is initially performed with two panels and there is a plan of adding one panel at the right of the second panel in the future will be described.

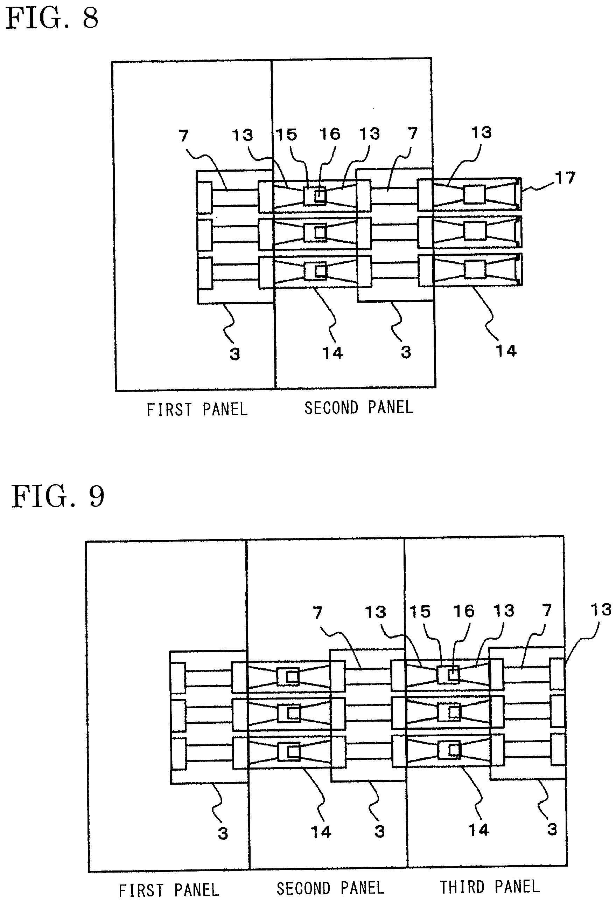

FIG. 8 is a top view of the gas-insulated switchboard according to the invention showing the case where there is a plan of arranging another board after two-panel arrangement. The solid insulation bus adapters 14 and insulating plugs 17 are attached to the bus connection bushings 13 protruding rightward of the second panel. Thus, in preparation for additional installation in the future, the solid insulation bus adapters 14 are connected to the bus connection bushings 13 located on the side where additional installation is planned, and the insulating plugs 17 are attached to ends of the solid insulation bus adapters 14. Thus, it becomes possible to operate the open/close devices while insulating the bus ends of the second panel on the side where additional installation is planned.

FIG. 9 is a top view showing a state in which three panels are arranged in a row. In the case of additionally providing the third panel after the state shown in FIG. 8, the buses 7 are powered off, the insulating plugs 17 attached to the solid insulation bus adapters 14 on the right side of the second panel are detached, and the board for the third panel is arranged through the same procedure as in the case of the second panel described above, whereby the buses 7 of the third panel are connected.

In the case of further increasing arranged boards, the boards for the fourth and subsequent panels can be arranged in a row by the same method as described above. On the other hand, in the case where there is no plan of increasing boards any more, the bus connection bushings 13 on the outward side of the last end board need not protrude in a conical shape.

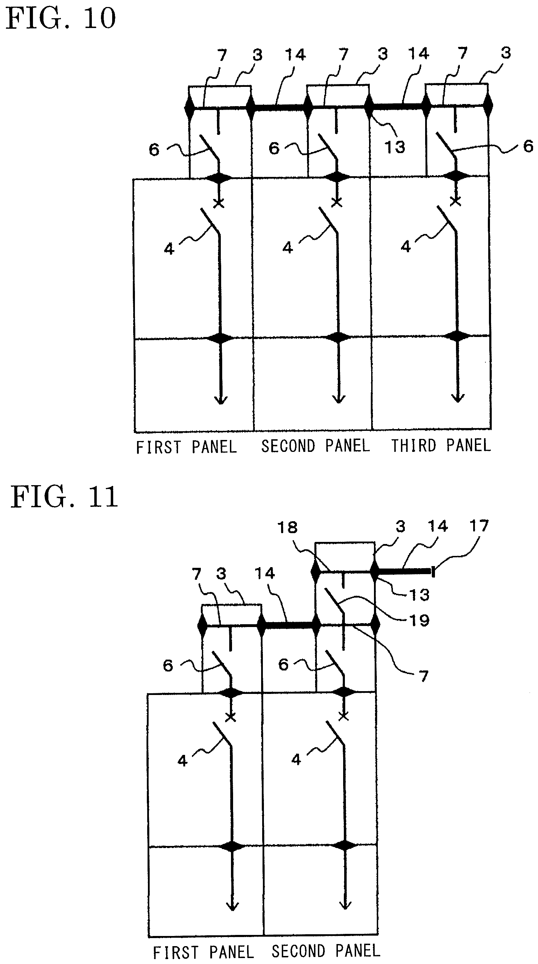

FIG. 10 is a single-line diagram corresponding to FIG. 9, in the case where boards for three panels are arranged in a row.

In the conventional gas-insulated switchgear as shown in Patent Document 1, for example, it is necessary to detach all the insulation buses of the already provided boards, arrange an additional board in a row, and then attach the insulation buses again. In contrast, in the present embodiment, at the time of additional installation, the insulating plugs 17 at the end board are merely detached, and large-scale work is not performed on the already provided boards. Thus, it is possible to greatly reduce the working time.

FIG. 2 and FIG. 6 to FIG. 9 have shown the case where the provided position of the bus tank 3 in the switchgear width direction is located to the right side as seen from the front side. However, the provided position of the bus tank 3 in the switchgear width direction is not limited to that shown in the drawings. For example, the bus tank 3 may be located at the left side or the center in the switchgear width direction.

As described above, in the gas-insulated switchgear according to embodiment 1, a bus tank storing a bus is provided above a circuit breaker tank storing a circuit breaker, the bus is connected to a bus connection bushing provided at a width-direction end of the bus tank, a tank width dimension of the bus tank is smaller than a enclosure width dimension of the gas-insulated switchgear, and a space formed by a difference between the enclosure width dimension and the tank width dimension serves as a connection space for the bus when the gas-insulated switchgear is arranged in a row. Therefore, in the case of performing work of connecting buses with an adjacent board to be arranged in a row, the buses of both adjacent boards can be easily connected using the connection space. Thus, it becomes possible to reduce the working time.

In addition, in the case where the gas-insulated switchgears are arranged in a row, the bus connection bushings of the adjacent boards are connected to each other via the solid insulation bus adapters in the connection space. Therefore, at the time of board arrangement, it is possible to easily connect the buses and arrange the boards in a row, without detaching the insulation buses at the already provided boards. In addition, the state after board arrangement is equivalent to a state in which the buses are connected via solid insulation buses.

In addition and according to the invention, the solid insulation bus adapters are connected to the bus connection bushings, and the insulating plugs are provided at the ends of the solid insulation bus adapters. Therefore, in the case of performing additional installation work in the future, it is possible to easily connect the buses to the additional board by detaching the insulating plugs of the solid insulation bus adapters, whereby the working time can be reduced.

### Embodiment 2

FIG. 11 is a single-line diagram showing a gas-insulated switchgear according to embodiment 2. FIG. 11 shows the case where two panels are arranged in a row, and the first panel is the same as that in embodiment 1. The present embodiment has a characteristic part in the gas-insulated switchgear for the second panel, while parts equivalent to those in the first panel are denoted by the same reference characters.

The bus connection between the first panel and the second panel is the same as in embodiment 1, and the connection is made using the solid insulation bus adapter 14 in the connection space on the lateral side of the bus tank 3. The structure described thus far is the same as in embodiment 1.

In the present embodiment, as shown in FIG. 11, inside the bus tank 3 for the second panel, a second bus 18 is provided in parallel to and separately from the same bus 7 as in embodiment 1. The second bus 18 is also supported by the bus connection bushing 13.

Inside the bus tank 3 of the board for the second panel, the bus 7 and the second bus 18 are connected via a second disconnector 19. The solid insulation bus adapter 14 is connected to the outward side of the bus connection bushing 13 on the right side of the second bus 18, and the second bus 18 is insulated by the insulating plug 17. It is noted that the second disconnector 19 part is not limited to a disconnector, that is, a switch is only required. In addition, although two buses are provided here, more than two buses may be provided.

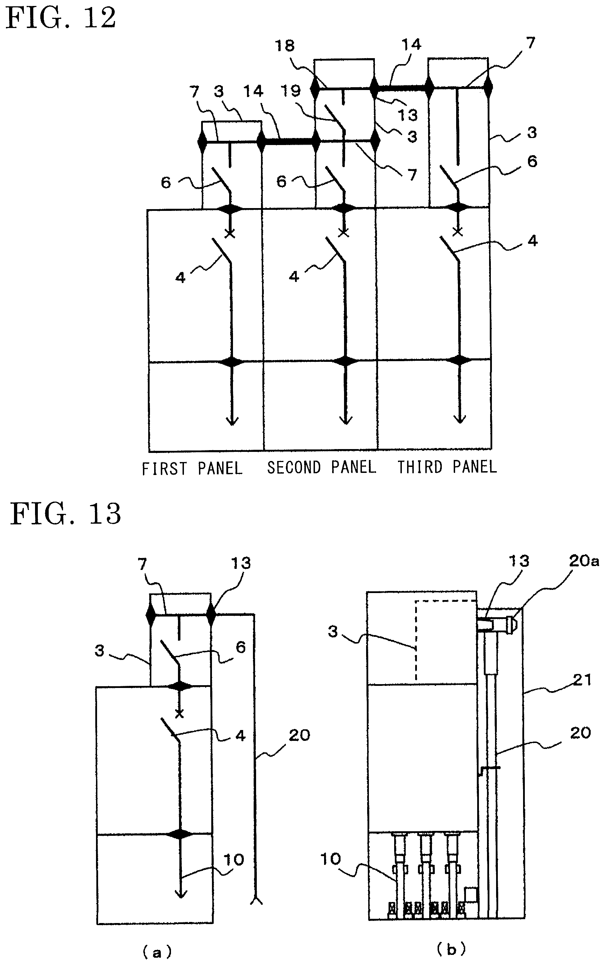

FIG. 12 is a single-line diagram showing a state in which the third panel is arranged in a row. In the third panel, the height of the bus tank 3 is set to be approximately equal to the height of the second panel, and the position of the bus 7 is matched with the position of the second bus 18 in the second panel. The other configurations are basically the same as in the first panel. Therefore, the same parts are denoted by the same reference characters and the description thereof is omitted.

In the case of additionally installing the third panel at the right of the second panel, first, the second disconnector 19 in the board for the second panel is switched "off" to disconnect the bus 7 and the second bus 18 in the board for the second panel, and the second bus 18 is grounded. In this way, in additional installation work, while the first panel and the second panel remain in operation without being powered off, the insulating plug 17 of the solid insulation bus adapter 14 connected to the second bus 18 is detached and the third panel is arranged in a row through the same procedure as for the second panel.

After additional installation, the disconnector 19 in the second panel and the disconnector 6 in the third panel are switched "on", and then the circuit breaker 4 in the third panel is switched "on", whereby the third panel is also energized and thus becomes able to operate.

As described above, in the gas-insulated switchgear according to embodiment 2, the buses stored in the bus tank are composed of a plurality of buses arranged in parallel, and the plurality of buses are connected to each other via a switch. Therefore, in the case of increasing the arranged board in additional installation, the switch is turned off, and the bus on the additional board side is grounded, whereby additional installation work can be performed in a state in which the buses at the already provided boards are energized.

### Embodiment 3

FIG. 13 shows a gas-insulated switchgear according to embodiment 3 which is not part of the invention.

FIG. 13(a) shows a single-line diagram, and FIG. 13(b) shows only major parts of the front view of the board corresponding to FIG. 13(a).

The gas-insulated switchgear itself is basically the same as that described in embodiment 1. The bus connection bushing 13 is provided on the lateral side of the bus 7 stored in the bus tank 3. Here, a power cable 20 can be connected to the outward side of the bus connection bushing 13, and this is a characteristic part of the present embodiment. Therefore, the shape of a connection interface on the outward side of the bus connection bushing 13 to which the power cable 20 is connected is formed to be the same as the shape of an interface of a general cable connection portion. That is, the outward protruding side of the bus connection bushing 13 is formed in such a shape to which a cable head portion 20a of the power cable 20 can be fitted.

Thus, the cable head portion 20a of the power cable 20 can be directly connected to the bus connection bushing 13. A cable cover 21 for cable protection is provided so as to cover the power cable 20.

As shown in the single-line diagram in FIG. 13(a), a path leading from the power cable 20 on the receiving side through the bus 7, the disconnector 6, and the circuit breaker 4 to the power cable 10 on the feeding side can be formed in one panel of the open/close device.

In the conventional switchgear, for example, in the case where a power cable is led into the switchgear from the lower side and then a feeding cable is led out downward through the switchgear, one more panel is added to the present board, buses are connected between the present board and the additional board, and the feeding cable is led out downward from the additional board side. Therefore, a space for two panels is needed, leading to increase in both cost and space. In contrast, in the present embodiment, the structure can be made with only one panel. As a matter of course, as in embodiment 1, a board may be additionally installed on the left side of the present board.

As described above, in the gas-insulated switchgear according to embodiment 3, the shape of a connection interface on the outward side of the bus connection bushing is formed to match an interface of a connection portion of a power cable, so as to allow the power cable to be directly connected to the bus connection bushing. Therefore, it is possible to easily connect the power cable on the receiving side without the need of a board for cable connection.

### DESCRIPTION OF THE REFERENCE CHARACTERS

1 gas-insulated switchgear
2 circuit breaker tank
3 bus tank
4 circuit breaker
5 instrument current transformer
6 disconnector
7 bus
8 operation chamber
9 control chamber
10 power cable
11 cable chamber
12 bushing
13 bus connection bushing
13a conductor portion
13b insulating portion
14 solid insulation bus adapter
14a surface conductive layer
14b internal insulating layer
14c plug-in portion
14d bus contact engagement portion
15 plug-in contactor recess
16 plug-in contactor projection
16a contactor portion
17 insulating plug
18 second bus
19 second disconnector
20 power cable
20a cable head portion
21 cable cover

## Claims

1. A gas-insulated switchgear system comprising a plurality of gas-insulated switchgears (1) arranged in a row in a switchgear width direction which is a width direction of a switchgear enclosure, the gas-insulated switchgears (1) each including a circuit breaker tank (2) storing a circuit breaker (4), and a bus tank (3) provided above the circuit breaker tank (2) and storing a bus (7), wherein
the bus tank (3) of each of the gas-insulated switchgears (1) arranged in a row is provided with bus connection bushings (13) connected to the bus (7), at respective both ends of the bus (7) in the switchgear width direction,
a tank width dimension of the bus tank (3) in the switchgear width direction is smaller than an enclosure width dimension of the switchgear enclosure,
the bus connection bushings (13) of the adjacent bus tanks (3) are connected to each other via a first solid insulation bus adapter (14) provided in a space formed by a difference between the enclosure width dimension and the bus tank width dimension, and
a second solid insulation bus adapter (14) having an end to which an insulating plug (17) is attached is connected to the bus connection bushing (13) of the bus tank (3) on a last end side to which an additional board is planned to be arranged in a row.

2. The gas-insulated switchgear system according to claim 1, wherein
each solid insulation bus adapter (14) has a cylindrical shape and has a conductive layer (14a) at an outer surface thereof and has an insulating layer (14b) on an inner side thereof.

3. The gas-insulated switchgear system according to claim 1 or 2, wherein
each bus connection bushing (13) is formed such that a part protruding outward of the bus tank (3) has a conductor portion (13a) at a center and has an insulating portion (13b) covering an outer surface thereof, and the insulating portion (13b) has a conical shape tapered toward a tip end.

4. The gas-insulated switchgear system according to any one of claims 1 to 3, wherein
the bus (7) stored in the bus tank (3) comprises a plurality of buses (7) arranged in parallel, and the plurality of buses (7) are connected to each other via a switch (6,9) .

## Patentansprüche

1. Gasisoliertes Schaltanlagensystem, das eine Vielzahl von gasisolierten Schaltanlagen (1) aufweist, die in einer Reihe in einer Schaltanlagenbreitenrichtung, die eine Breitenrichtung einer Schalteinlageneinfassung darstellt, angeordnet sind, wobei die gasisolierten Schaltanlagen (1) jeweils einen Leistungsschaltertank (2), der einen Leistungsschalter (4) speichert, und einen Bustank (3) umfasst, der oberhalb des Leistungsschaltertanks (2) angeordnet ist und der einen Bus (7) speichert, wobei
der Bustank (3) von jeder der gasisolierten Schaltanlagen (1), die in einer Reihe angeordnet sind, mit Busverbindungsbuchsen (13), die mit dem Bus (7) verbunden sind, an jeweiligen beiden Enden des Busses (7) in der Schaltanlagenbreitenrichtung vorgesehen ist,
eine Tankbreitenabmessung des Bustanks (3) in der Schaltanlagenbreitenrichtung kleiner als eine Einfassungsbreitenabmessung der Schalteinlageneinfassung ist,
die Busverbindungsbuchsen (13) der benachbarten Bustanks (3) über einen ersten soliden Isolierbusadapter (14) miteinander verbunden sind, der in einem Raum vorgesehen ist, der durch eine Differenz zwischen der Einfassungsbreitenabmessung und der Bustankbreitenabmessung gebildet wird, und
ein zweiter solider Isolierbusadapter (14), der ein Ende aufweist, an dem ein Isolierstecker (17) angebracht ist, mit der Busverbindungsbuchse (13) des Bustanks (3) auf einer letzten Endseite verbunden ist, für die geplant ist, dass sie mit einer zusätzlichen Platte in einer Reihe anzuordnen ist.

2. Gasisoliertes Schaltanlagensystem nach Anspruch 1, wobei
jeder solide Isolierbusadapter (14) eine zylindrische Form aufweist und eine leitende Schicht (14a) an einer äußeren Fläche davon aufweist und eine isolierende Schicht (14b) auf einer inneren Seite davon aufweist.

3. Gasisoliertes Schaltanlagensystem nach Anspruch 1 oder 2, wobei
jede Busverbindungsbuchse (13) derart ausgebildet ist, dass ein Teil, der nach außen aus dem Bustank (3) vorsteht, einen Leiterabschnitt (13a) bei einer Mitte aufweist und einen Isolierabschnitt (13b) aufweist, der eine äußere Fläche davon abdeckt, und wobei der Isolierabschnitt (13b) eine konische Form aufweist, die sich in Richtung eines spitzen Endes verjüngt.

4. Gasisoliertes Schaltanlagensystem nach einem der Ansprüche 1 bis 3, wobei
der Bus (7), der in dem Bustank (3) gespeichert ist, eine Vielzahl von Bussen (7) aufweist, die parallel angeordnet sind, und wobei die Vielzahl von Bussen (7) über einen Schalter (6, 9) miteinander verbunden sind.

## Revendications

1. Système d'appareillages de commutation à isolation gazeuse, comprenant une pluralité d'appareillages de commutation à isolation gazeuse (1) agencés en une rangée dans un sens de largeur d'appareillages de commutation qui est un sens de largeur d'une enceinte d'appareillages de commutation, les appareillages de commutation à isolation gazeuse (1) incluant chacun un réservoir de disjoncteur (2) stockant un disjoncteur (4), et un réservoir de bus (3) prévu au-dessus du réservoir de disjoncteur (2) et stockant un bus (7), dans lequel
le réservoir de bus (3) de chacun des appareillages de commutation à isolation gazeuse (1) agencé en une rangée est pourvu de traversées de connexion de bus (13) connectées au bus (7), à deux extrémités respectives du bus (7) dans le sens de largeur d'appareillages de commutation,
une dimension de largeur de réservoir du réservoir de bus (3) dans le sens de largeur d'appareillages de commutation est inférieure à une dimension de largeur d'enceinte de l'enceinte d'appareillages de commutation,
les traversées de connexion de bus (13) des réservoirs de bus adjacents (3) sont connectées les unes aux autres par l'intermédiaire d'un premier adaptateur de bus à isolation solide (14) prévu dans un espace formé par une différence entre la dimension de largeur d'enceinte et la dimension de largeur de réservoir de bus, et
un second adaptateur de bus à isolation solide (14), ayant une extrémité à laquelle un bouchon isolant (17) est attaché, est connecté à la traversée de connexion de bus (13) du réservoir de bus (3) sur un côté dernière extrémité sur lequel il est prévu d'agencer un tableau supplémentaire en une rangée.

2. Système d'appareillages de commutation à isolation gazeuse selon la revendication 1, dans lequel
chaque adaptateur de bus à isolation solide (14) a une forme cylindrique et a une couche conductrice (14a) sur une surface extérieure de celui-ci et a une couche isolante (14b) sur un côté intérieur de celui-ci.

3. Système d'appareillages de commutation à isolation gazeuse selon la revendication 1 ou 2, dans lequel
chaque traversée de connexion de bus (13) est formée de telle sorte qu'une partie faisant saillie vers l'extérieur du réservoir de bus (3) ait une portion conductrice (13a) à un centre et ait une portion isolante (13b) couvrant une surface extérieure de celle-ci, et la portion isolante (13b) a une forme conique effilée vers une extrémité d'embout.

4. Système d'appareillages de commutation à isolation gazeuse selon l'une quelconque des revendications 1 à 3, dans lequel
le bus (7) stocké dans le réservoir de bus (3) comprend une pluralité de bus (7) agencés en parallèle, et la pluralité de bus (7) sont connectés les uns aux autres par l'intermédiaire d'un commutateur (6, 9).
